# EUROPÄISCHE PATENTSCHRIFT

(11) **EP 3 969 853 B1**
(45) Veröffentlichungstag und Bekanntmachung des Hinweises auf die Patenterteilung: **01.11.2023**
(21) Anmeldenummer: 20718633.9
(22) Anmeldetag: 08.04.2020
(51) Int. Cl.: G01F 25/20, G01F 23/296

(54) **ZUSTANDSÜBERWACHUNG EINES VIBRONISCHEN SENSORS**
MONITORING THE CONDITION OF A VIBRONIC SENSOR
SURVEILLANCE DE L'ÉTAT D'UN CAPTEUR VIBRONIQUE

(30) Priorität: 16.05.2019 DE 102019112866
(43) Veröffentlichungstag der Anmeldung: 23.03.2022
(73) Patentinhaber: Endress+Hauser SE+Co. KG, 79689 Maulburg (DE)
(72) Erfinder: UPPENKAMP, Kaj, 79664 Wehr (DE); STRITTMATTER, Christian, 79736 Rickenbach (DE); WERNET, Armin, 79618 Rheinfelden (DE); D'ANGELICO, Sascha, 79595 Rümmingen (DE)
(74) Vertreter: Koslowski, Christine Adelheid
(86) Internationale Anmeldenummer: PCT/EP2020/060038
(87) Internationale Veröffentlichungsnummer: WO 2020/229064

(56) Entgegenhaltungen:
- WO-A1-2011/038985
- WO-A1-2016/139051
- DE-A1-102011 088 351
- DE-A1-102012 103 165

## Beschreibung

Die Erfindung betrifft ein Verfahren zur Zustandsüberwachung eines vibronischen Sensors zur Bestimmung und/oder Überwachung zumindest einer, insbesondere physikalischen oder chemischen, Prozessgröße eines Mediums in einem Behältnis. Der vibronische Sensor umfasst eine Sensoreinheit mit einer mechanisch schwingfähigen Einheit. Die zu überwachende Prozessgröße kann beispielsweise gegeben sein durch den Füllstand eines Mediums, den Durchfluss eines Mediums, aber auch durch die Dichte, oder die Viskosität. Das Behältnis ist beispielsweise ein Behälter oder eine Rohrleitung.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE 102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE102010030982A1.

Sowohl das Anregesignal als auch das Empfangssignal sind charakterisiert durch ihre Frequenz w, Amplitude A und/oder Phase Φ. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist, wie beispielsweise in den Dokumenten DE10050299A1, DE102007043811A1, DE10057974A1, DE102006033819A1, DE102015102834A1, DE102011 088351 A1.

Um das zuverlässige Arbeiten eines vibronischen Sensor zu gewährleisten, sind aus dem Stand der Technik verschiedene Verfahren bekannt geworden, mittels welcher Aussagen über den Zustand des vibronischen Sensors getroffen werden können. Aus der DE102005036409A1 ist beispielsweise eine Möglichkeit zur Überwachung zur Überwachung der Qualität eines vibronischen Sensors bekannt geworden. Eine Messvorrichtung umfasst mindestens eine Leistungsmesseinheit, welche den Energiebedarf der Anrege-/Empfangseinheit zumindest für den Fall von Resonanzschwingungen überwacht. Hierdurch lässt sich eine Aussage über die Güte des vibronischen Sensors machen. Je höher die Güte, desto weniger Energie wird zur Anregung von Resonanzschwingungen benötigt. Steigt also der Energiebedarf zur Anregung von Resonanzschwingungen während eines vorgebbaren Zeitraums an, oder überseigt die während der Fertigung des Sensors ermittelte Güte einen vorgebbaren Grenzwert, so kann auf einen Defekt, das Vorliegen von Ansatz im Bereich der schwingfähigen Einheit oder ähnliches geschlossen werden.

Aus der DE102007008669A1 ist wiederum ein vibronischer Sensor mit einer Elektronikeinheit bekannt geworden, der eine Phasenmesseinheit, einen einstellbaren Phasenschieber und eine Phaseneinstelleinheit, welche die Einstellung der Phasenverschiebung zwischen Anregesignal und Empfangssignal regelt, umfasst. Steuerparameter können über die Betriebsdauer des Sensors in vorgebbaren Zeitabständen aktualisiert und hinterlegt werden. Ferner kann anhand eines Vergleichs zwischen hinterlegten Steuerparametern und aktuellen Steuerdaten eine Zustandsüberwachung vorgenommen werden.

Die DE102017111392A1 beschreibt ein Verfahren zur Zustandsüberwachung eines vibronischen Sensors, bei welchem anhand eines Spektrums des Empfangssignals oder einer daraus abgeleiteten Größe als Funktion der Anregefrequenz eine Aussage über den Zustand des Sensors ermittelt wird

Aus der DE102017102550A1 ist eine Möglichkeit zur Zustandsüberwachung eines vibronischen Sensors anhand eines Vergleichs eines Messwerts einer für den Sensor charakteristischen physikalischen und/oder chemischen Größe, beispielsweise die Frequenz, des Sensors mit einem Referenzwert bekannt geworden. Auf diese Weise kann beispielsweise eine Aussage über Korrosion, Abrasion oder Ansatz im Bereich der schwingfähigen Einheit gemacht werden.

Oftmals ist es mit den bekannten Verfahren jedoch nur möglich auszusagen, dass prinzipiell Korrosion, Abrasion oder Ansatz vorliegt. Die genaue Lokalisierung und genaue Bestimmung der Ursache eines veränderten Schwingungsverhaltens des jeweiligen Sensors dagegen sind oft nicht allein aus den Messignalen ermittelbar.

Der vorliegenden Erfindung liegt deshalb die Aufgabe zugrunde, ein Verfahren zur Zustandsüberwachung eines vibronischen Sensors anzugeben, welches eine möglichst genaue Zustandsüberwachung ermöglicht.

Die Aufgabe wird erfindungsgemäß gelöst durch ein Verfahren zur Zustandsüberwachung eines vibronischen Sensors zur Bestimmung und/oder Überwachung zumindest einer Prozessgröße eines Mediums in einem Behältnis, mit zumindest einer Sensoreinheit mit einer mechanisch schwingfähigen Einheit, umfassend folgende Verfahrensschritte:
- Anregen der mechanisch schwingfähigen Einheit zu mechanischen Schwingungen mittels eines Anregesignals und Empfangen der mechanischen Schwingungen in Form eines Empfangssignals,
- Bestimmen eines Messwerts für die Amplitude und eines Messwerts für die Frequenz des Empfangssignals,
- Vergleichen der Messwerte für die Amplitude und für die Frequenz mit jeweils einem Referenzwert für die Amplitude und die Frequenz, und
- Ermitteln eines Zustandsindikators aus dem Vergleich,

wobei im Falle, dass kein Messwert für die Amplitude ermittelbar ist, und der Messwert für die Frequenz kleiner ist als der Referenzwert, auf das Vorhandensein einer Korrosion und/oder Abrasion an den Schwingstäben und/oder eines harten Ansatzes im Bereich der Membran geschlossen wird,
wobei im Falle, dass die Abweichung zwischen dem Messwert und Referenzwert für die Amplitude kleiner ist als ein vorgebbarer Referenzwert, und der Messwert für die Frequenz kleiner als der Grenzwert ist, auf das Vorhandensein eines harten Ansatzes im Bereich der Schwingstäbe und/oder einer Korrosion und/oder Abrasion im Bereich der Membran geschlossen wird,
wobei im Falle, dass der Messwert für die Amplitude kleiner ist als der Referenzwert, und dass die Abweichung zwischen dem Messwert und Referenzwert für die Frequenz kleiner ist als ein vorgebbarer Grenzwert, auf einen Defekt im Bereich der Antriebs-/Empfangseinheit, insbesondere im Bereich zumindest eines piezoelektrischen Elements der Antriebs-/Empfangseinheit, und/oder auf einen Defekt im Bereich einer Elektronik geschlossen wird.

Indem die Frequenz und die Amplitude gleichzeitig betrachtet werden, kann eine besonders genaue Zustandsüberwachung realisiert werden. Vorteilhaft muss zur Durchführung der Zustandsüberwachung der jeweilige Prozess, für welchen der Sensor verwendet wird, nicht unterbrochen werden. Durch Aufzeichnen der Messwerte für die Frequenz und Amplitude lassen sich zeitliche Entwicklungen des Sensors beobachten.

Das erfindungsgemäße Verfahren ermöglicht ferner vorteilhaft die Durchführung einer vorausschauenden Wartung (engl. predictive maintenance). Anhand eines jeweils bestimmten Messwerts für die Amplitude und Frequenz kann beispielsweise abgeschätzt werden, wann eine Wartung des Sensors erforderlich ist.

In einer Ausgestaltung des Verfahrens wird eine Abweichung zwischen den Messwerten und Referenzwerten für die Frequenz und/oder Amplitude bestimmt, und der Zustandsindikator anhand der Abweichung ermittelt. In dieser Hinsicht ist es von Vorteil zu ermitteln, ob die Abweichung zwischen dem Messwert und Referenzwert für die Frequenz und/oder Amplitude einen vorgebbaren Grenzwert überschreitet.

In einer weiteren Ausgestaltung des Verfahrens handelt es sich bei den Referenzwerten für die Amplitude und die Frequenz jeweils um einen Wert, insbesondere einen Messwert, für die Amplitude und die Frequenz, welcher Wert einer Resonanzschwingung der schwingfähigen Einheit in der Grundschwingungsmode und an Luft entspricht. Beispielsweise können diese Referenzwerte während der Fertigung des jeweiligen Sensors ermittelt und beispielsweise in einer Speichereinheit, in einer Datenbank oder auf einem Datenblatt hinterlegt werden. Die Referenzwerte entsprechen dann dem Auslieferungszustand des Sensors. Sie können aber auch beim Kunden und nach Einbau in das jeweilige Behältnis ermittelt werden. Indem die Referenzwerte für jeden Sensor individuell bestimmt werden, kann den üblichen, sich durch Fertigungstoleranzen ergebenden, Varianzen dieser Werte, direkt begegnet werden.

Eine Ausgestaltung des Verfahrens beinhaltet, dass die mechanisch schwingfähige Einheit an Luft zu mechanischen Resonanzschwingungen in der Grundschwingungsmode angeregt wird, und wobei das Empfangssignal die Resonanzschwingungen der schwingfähigen Einheit in der Grundschwingungsmode repräsentiert. Die Zustandsüberwachung wird also dann ausgeführt, wenn die schwingfähige Einheit gerade nicht von Medium bedeckt ist.

In einer bevorzugten Ausgestaltung des Verfahrens handelt es sich bei dem Zustandsindikator um eine Aussage über einen Ansatz, eine Korrosion, eine Abrasion im Bereich der schwingfähigen Einheit, um einen Defekt im Bereich einer Antriebs-/Empfangseinheit, mittels welcher die Anregung der schwingfähigen Einheit zu mechanischen Schwingungen erfolgt, oder um einen Defekt einer Elektronik eines Sensors, welcher die schwingfähige Einheit umfasst.

Es ist von Vorteil, wenn es sich bei der schwingfähigen Einheit um eine Schwinggabel mit einer Membran und zwei an der Membran befestigten Schwingstäben handelt.

Die erfindungsgemäße Zustandsüberwachung ermöglicht eine Vielzahl unterschiedlicher Aussagen über die schwingfähige Einheit, von denen einige besonders bevorzugte Varianten der Zustandsüberwachung im Folgenden angegeben sind:
Eine weitere Ausgestaltung des Verfahrens beinhaltet, dass im Falle, dass der Messwert für die Amplitude und der Messwert für die Frequenz jeweils kleiner als der jeweilige Referenzwert ist, auf das Vorhandensein eines weichen Ansatzes im Bereich der Schwingstäbe und/oder auf Medienrückstände im Bereich der schwingfähigen Einheit geschlossen wird.

Im Falle, dass die schwingfähige Einheit Schwingungen mit einer vorgebbaren Abrissfrequenz ausführt, kann beispielsweise auf das Vorliegen eines Defekts der Antriebs-/Empfangseinheit, eine mangelhafte Kontaktierung, einen Kabelbruch, eine Blockade der Schwingstäbe oder einen Defekt in der Elektronik geschlossen werden.

Im Falle, dass kein Messwert für die Frequenz ermittelbar ist, kann auf einen Defekt der Elektronik geschlossen werden.

Eine weitere bevorzugte Ausgestaltung beinhaltet, dass das Verfahren gemäß dem IO-Link Standard ausgestaltet ist. Der IO-Link Standard ist in der Norm IEC61131-9 definiert und ist eine in der Automatisierungstechnik weit verbreitete Möglichkeit zur Anbindung von intelligenten Aktoren und Sensoren. IO-Link betrifft eine serielle Punkt-zu-Punkt-Verbindung, über welche Daten zwischen einem sogenannten IO-Link-Master und einem oder mehreren angeschlossenen IO-Link-Gerät (Device) als Slave übertragen werden. Als Master stehen beispielsweise Feldbusmodule oder SPS-Schnittstellenbaugruppen zur Verfügung welche einen oder mehrere Ports zur Anbindung von IO-Link Devices aufweisen. Der IO-Link-Master stellt die Verbindung zwischen dem IO-Link-Device und dem jeweiligen Automatisierungssystem dar und kommuniziert beispielsweise über einen Feldbus. Bei den IO-Link-Devices dagegen handelt es sich um Sensoren, Aktoren, Bedienelemente oder auch Anzeigeeinheiten. Die IO-Link-Devices werden dabei über sogenannte IODD-Beschreibungsdateien (IO-Link Device Description) beschrieben, welche beispielsweise gerätespezifische Konfigurationsparameter des jeweiligen IO-Link-Devices enthält.

Zusammenfassend erlaubt die vorliegende Erfindung eine präzise Zustandsüberwachung eines vibronischen Sensors, welche sehr einfach realisierbar und während des jeweiligen fortlaufenden Prozesses durchführbar ist. Durch die gleichzeitige Betrachtung von Frequenz und Amplitude ist eine genaue Zustandsüberwachung möglich, anhand welcher nicht nur auf das Vorhandensein eines Defekts geschlossen werden kann. Vielmehr erlaubt das erfindungsgemäße Verfahren die Lokalisierung des Defekts innerhalb des Sensors und auch die Bestimmung der Ursache für das jeweilige geänderte Verhalten.

Die Erfindung sowie deren Vorteile werden anhand der nachfolgenden Figuren Fig. 1 bis Fig. 2 gezeigt sind, genauer beschrieben. Es zeigt:
Fig. 1 einen vibronischen Sensor gemäß Stand der Technik, und
Fig.2 eine schwingfähige Einheit eines vibronischen Sensors in Form einer Schwinggabel.

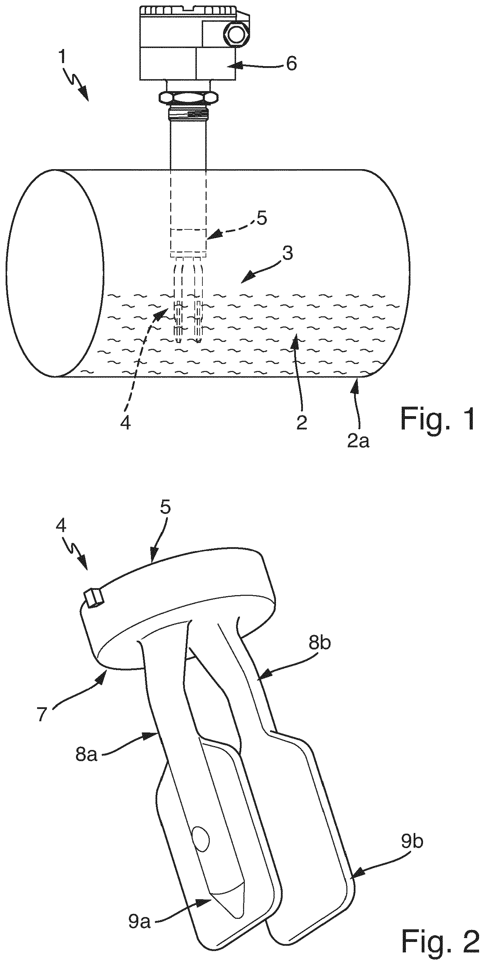

In Fig. 1 ist ein vibronischer Sensor 1 gezeigt. Dargestellt ist eine Sensoreinheit 3 mit einer schwingfähigen Einheit 4 in Form einer Schwinggabel, welche teilweise in ein Medium 2 eintaucht, welches sich in einem Behälter 2a befindet. Die schwingfähige Einheit 4 wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

In Fig. 2 ist eine schwingfähige Einheit 4 in Form einer Schwinggabel, wie sie beispielsweise im von der Anmelderin unter dem Namen LIQUIPHANT vertriebenen vibronischen Sensor 1 integriert wird, in einer Seitenansicht gezeigt. Die Schwinggabel 4 umfasst zwei an eine Membran 7 angeformte Schwingstäbe 8a,8b, an welche endseitig zwei Paddel 9a,9b angeformt sind. Die Schwingstäbe 8a,8b zusammen mit den Paddeln 9a,9b werden häufig auch als Gabelzinken bezeichnet. Um die mechanisch schwingfähige Einheit 4 in mechanische Schwingungen zu versetzen, wird mittels einer auf der den Schwingstäben 7a,7b abgewandten Seite der Membran 8 stoffschlüssig angebrachten Antriebs-/Empfangseinheit 5 eine Kraft auf die Membran 8 aufgeprägt. Die Antriebs-/Empfangseinheit 5 ist eine elektromechanische Wandlereinheit, und umfasst beispielsweise ein piezoelektrisches Element, oder auch einen elektromagnetischen Antrieb [nicht gezeigt]. Entweder sind die Antriebseinheit 5 und die Empfangseinheit als zwei separate Einheiten aufgebaut, oder als kombinierte Antriebs-/Empfangseinheit. Im Falle, dass die Antriebs-/Empfangseinheit 5 ein piezoelektrisches Element 9 umfasst, wird die der Membran 7 aufgeprägte Kraft über das Anlegen eines Anregesignals U_{A}, beispielweise in Form einer elektrischen Wechselspannung, generiert. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements derart, dass das Anlegen einer elektrischen Wechselspannung als Anregesignal U_{A} zu einer Schwingung der stoffschlüssig mit der Antriebs-/Empfangseinheit 5 verbundenen Membran 7 hervorruft. Umgekehrt werden die mechanischen Schwingungen der schwingfähigen Einheit über die Membran an die Antriebs-/Empfangseinheit 5 übertragen und in ein elektrisches Empfangssignal Uₑ umgewandelt. Die jeweilige Prozessgröße, beispielsweise ein vorgebbare Füllstand des Mediums 2 in dem Behälter 2a, oder auch die Dichte oder Viskosität des Mediums 2, können dann anhand des Empfangssignals Uₑ ermittelt werden.

Eine Möglichkeit der Zustandsüberwachung des vibronischen Sensors wird nachfolgend anhand eines Vergleichs einer gemessenen Frequenz f und einer gemessenen Amplitude A der schwingfähigen Einheit 4 für eine Anregung gemäß der Grundschwingungsmode der schwingfähigen Einheit 4 erläutert. In einem ersten Schritt werden Referenzwerte f_{ref}, A_{ref} für die Amplitude und die Frequenz ermittelt, wobei die schwingfähige Einheit 4 an Luft zu Resonanzschwingungen angeregt wird.

Zur Ermittlung einer Aussage über den Zustand des Sensors 1 im fortlaufenden Betrieb wird die schwingfähige Einheit erneut mittels eines Anregesignals U_{A} zu mechanischen Schwingungen in der Grundschwingungsmode angeregt und das die Schwingungen repräsentierende Empfangssignal U_{E} wird empfangen und hinsichtlich der Frequenz f und Amplitude A ausgewertet. Zu diesem Zeitpunkt ist die schwingfähige Einheit 4 nicht von Medium bedeckt. Diese Werte f, A werden dann beispielsweise mit den jeweiligen Referenzwerten f_{ref}, A_{ref} verglichen und eine Abweichung der Messwerte f, A von den Referenzwerten f_{ref}, A_{ref} ermittelt werden.

Beispielsweise kann ein vorgebbarer Grenzwert definiert werden. Übersteigt die Abweichung diesen Grenzwert, so liegt ggf. ein Problem vor, oder der Sensor 1 bedarf einer Wartung. Das erfindungsgemäße Verfahren bietet somit die Möglichkeit der vorausschauenden Wartung (engl. predictive maintainance).

### Bezugszeichen

- 1: Vibronischer Sensor
- 2: Medium
- 2a: Behälter
- 3: Sensoreinheit
- 4: Schwingfähige Einheit
- 5: Antriebs-/Empfangseinheit
- 6: Elektronikeinheit
- 7: Membran
- 8a,8b: Schwingstäbe
- 9a,9b: Paddel

- U_{A}: Anregesignal
- U_{E}: Empfangssignal
- f: Frequenz
- f_{ref}: Referenzwert für die Frequenz
- A: Amplitude
- A_{ref}: Referenzwert für die Amplitude

## Patentansprüche

1. Verfahren zur Zustandsüberwachung eines vibronischen Sensors (1) zur Bestimmung und/oder Überwachung zumindest einer Prozessgröße eines Mediums (2) in einem Behältnis (2a), mit zumindest einer Sensoreinheit (3) mit einer mechanisch schwingfähigen Einheit (4), umfassend folgende Verfahrensschritte:
- Anregen der mechanisch schwingfähigen Einheit (4) zu mechanischen Schwingungen mittels eines Anregesignals (U_{A}) und Empfangen der mechanischen Schwingungen in Form eines Empfangssignals (U_{E}),
- Bestimmen eines Messwerts für die Amplitude (A) und eines Messwerts für die Frequenz (f) des Empfangssignals (U_{E}),
- Vergleichen der Messwerte für die Amplitude (A) und für die Frequenz (f) mit jeweils einem Referenzwert für die Amplitude (A_{ref}) und die Frequenz (f_{ref}), und
- Ermitteln eines Zustandsindikators aus dem Vergleich,
**dadurch gekennzeichnet,**
**dass**
im Falle, dass kein Messwert für die Amplitude (A) ermittelbar ist, und
der Messwert für die Frequenz (f) kleiner ist als der Referenzwert (f_{ref}),
auf das Vorhandensein einer Korrosion und/oder Abrasion an den Schwingstäben (8a,8b) und/oder eines harten Ansatzes im Bereich der Membran (7) geschlossen wird,
und **dass** im Falle, dass die Abweichung zwischen dem Messwert (A) und Referenzwert (A_{ref}) für die Amplitude kleiner ist als ein vorgebbarer Grenzwert, und
der Messwert für die Frequenz (f) kleiner als der Referenzwert (f_{ref}) ist,
auf das Vorhandensein eines harten Ansatzes im Bereich der Schwingstäbe (8a,8b) und/oder einer Korrosion und/oder Abrasion im Bereich der Membran (7) geschlossen wird,
und **dass** im Falle, dass der Messwert für die Amplitude (A) kleiner ist als der Referenzwert (A_{ref}), und
**dass** die Abweichung zwischen dem Messwert (f) und Referenzwert (f_{ref}) für die Frequenz kleiner ist als ein vorgebbarer Grenzwert, auf einen Defekt im Bereich der Antriebs-/Empfangseinheit (5), insbesondere im Bereich zumindest eines piezoelektrischen Elements der Antriebs-/Empfangseinheit (5), und/oder auf einen Defekt im Bereich der Elektronik (6) geschlossen wird.

2. Verfahren nach Anspruch 1,
wobei eine Abweichung zwischen den Messwerten (f, A) und Referenzwerten (f_{ref}, A_{ref}) für die Frequenz und/oder Amplitude ermittelt wird, und wobei der Zustandsindikator anhand der Abweichung ermittelt wird.

3. Verfahren nach Anspruch 2,
wobei ermittelt wird, ob die Abweichung für die Frequenz (f) und/oder für die Amplitude (A) einen vorgebbaren Grenzwert überschreitet.

4. Verfahren nach zumindest einem der vorherigen Ansprüche,
wobei es sich bei den Referenzwerten für die Amplitude (A_{ref}) und die Frequenz (f_{ref}) jeweils um einen Wert für die Amplitude und die Frequenz handelt, welcher Wert einer Resonanzschwingung der schwingfähigen Einheit (4) in der Grundschwingungsmode und an Luft entsprechen.

5. Verfahren nach zumindest einem der vorhergehenden Ansprüche,
wobei die mechanisch schwingfähige Einheit (4) an Luft zu mechanischen Resonanzschwingungen in der Grundschwingungsmode angeregt wird, und wobei das Empfangssignal die Resonanzschwingungen der schwingfähigen Einheit (4) in der Grundschwingungsmode repräsentiert.

6. Verfahren nach zumindest einem der vorhergehenden Ansprüche,
wobei es sich bei dem Zustandsindikator um eine Aussage über einen Ansatz, eine Korrosion, eine Abrasion im Bereich der schwingfähigen Einheit (4), um einen Defekt im Bereich einer Antriebs-/Empfangseinheit (5), mittels welcher die Anregung der schwingfähigen Einheit (4) zu mechanischen Schwingungen erfolgt, oder um einen Defekt einer Elektronik (6) eines Sensors (1), welcher die schwingfähige Einheit (4) umfasst, handelt.

7. Verfahren nach zumindest einem der vorhergehenden Ansprüche
wobei es sich bei der schwingfähigen Einheit (4) um eine Schwinggabel mit einer Membran (7) und zwei an der Membran (7) befestigten Schwingstäben (8a,8b) handelt.

8. Verfahren nach zumindest einem der Ansprüche 1-6,
wobei im Falle,
dass der Messwert für die Amplitude (A) und der Messwert für die Frequenz (f) jeweils kleiner als der jeweilige Referenzwert (f_{ref}, A_{ref}) ist,
auf das Vorhandensein eines weichen Ansatzes im Bereich der Schwingstäbe (8a,8b) und/oder auf Medienrückstände im Bereich der schwingfähigen Einheit (4) geschlossen wird.

9. Verfahren nach zumindest einem der vorherigen Ansprüche,
wobei das Verfahren gemäß dem IO-Link Standard ausgestaltet ist.

## Claims

1. A method for monitoring the status of a vibronic sensor (1) for determining and/or monitoring at least one process variable of a medium (2) in a container (2a), with at least one sensor unit (3) with a unit that can mechanically oscillate (4), comprising the following process steps:
- Causing the unit that can mechanically oscillate (4) to mechanically oscillate using an excitation signal (U_{A}) and receiving the mechanical oscillations in the form of a received signal (U_{E}),
- Determining a measured value for the amplitude (A) and a measured value for the frequency (f) of the received signal (U_{E}),
- Comparing the measured values for the amplitude (A) and for the frequency (f) with a reference value for the amplitude (A_{ref}) and the frequency (f_{ref}), respectively, and
- Determining a status indicator from the comparison,
**characterized in that**
in the event
that no measured value can be determined for the amplitude (A), and the measured value for the frequency (f) is less than the reference value (f_{ref}), it is concluded that there is corrosion and/or abrasion on the oscillating rods (8a, 8b) and/or a hard deposit in the area of the membrane (7),
and in the event
that the deviation between the measured value (A) and reference value (A_{ref}) for the amplitude is less than a pre specifiable limit value, and the measured value for the frequency (f) is less than the reference value (f_{ref}), it is concluded that there is a hard deposit in the area of the oscillating rods (8a, 8b) and/or corrosion and/or abrasion in the area of the membrane (7),
and in the event
that the measured value for the amplitude (A) is less than the reference value (A_{ref}), and that the deviation between the measured value (f) and reference value (f_{ref}) for the frequency is less than a prespecifiable limit value, it is concluded that there is a defect in the area of the drive/receiving unit (5), in particular in the area of at least one piezoelectric element of the drive/receiving unit (5), and/or a defect in the area of the electronics (6).

2. The method as claimed in claim 1,
wherein a deviation between the measured values (f, A) and reference values (f_{ref}, A_{ref}) for the frequency and/or amplitude is determined, and wherein the status indicator is determined using the deviation.

3. The method as claimed in claim 2,
wherein it is determined if the deviation for the frequency (f) and/or for the amplitude (A) exceeds a prespecifiable limit value.

4. The method as claimed in at least one of the preceding claims,
wherein the reference values for the amplitude (A_{ref}) and the frequency (f_{ref}) are each a value for the amplitude and the frequency, said value corresponding to a resonant oscillation of the unit that can mechanically oscillate (4) in the basic oscillation mode and in air.

5. The method as claimed in at least one of the preceding claims, wherein mechanically resonant oscillation of the unit that can mechanically oscillate (4) is initiated in air in the basic oscillation mode, and wherein the received signal represents the resonant oscillations of the unit that can oscillate (4) in the basic oscillation mode.

6. The method as claimed in at least one of the preceding claims,
wherein the status indicator is a statement about a deposit, corrosion, abrasion in the area of the unit that can oscillate (4), a defect in the drive/receiving unit (5), which is used to cause the unit that can oscillate (4) to mechanically oscillate, or a defect in the electronics (6) of a sensor (1), which comprises the unit that can oscillate (4).

7. The method as claimed in at least one of the preceding claims,
wherein the unit that can oscillate (4) is an oscillating fork with a membrane (7) and two oscillating rods (8a, 8b) attached to the membrane (7).

8. The method as claimed in at least one of claims 1 to 6,
wherein in the event
that the measured value for the amplitude (A) and the measured value for the frequency (f) are each less than the corresponding reference value (f_{ref}, A_{ref}) , it is concluded that there is a soft deposit in the area of the oscillating rods (8a, 8b) and/or media residue in the area of the unit that can mechanically oscillate (4).

9. The method as claimed in at least one of the preceding claims, wherein the
method is configured as per the 10-Link standard.

## Revendications

1. Procédé destiné à la surveillance d'état d'un capteur vibronique (1) destiné à la détermination et/ou à la surveillance d'au moins une grandeur process d'un produit (2) dans un réservoir (2a), avec au moins une unité de capteur (3) comprenant une unité apte à vibrer mécaniquement (4), lequel procédé comprend les étapes suivantes :
- Excitation de l'unité apte à vibrer mécaniquement (4) en vibrations mécaniques au moyen d'un signal d'excitation (U_{A}) et réception des vibrations mécaniques sous forme d'un signal de réception (U_{E}),
- Détermination d'une valeur mesurée pour l'amplitude (A) et d'une valeur mesurée pour la fréquence (f) du signal de réception (UE),
- Comparaison des valeurs mesurées pour l'amplitude (A) et pour la fréquence (f) avec respectivement une valeur de référence pour l'amplitude (A_{ref}) et la fréquence (f_{ref}), et
- Détermination d'un indicateur d'état à partir de la comparaison,
**caractérisé**
**en ce que**, dans le cas où aucune valeur mesurée pour l'amplitude (A) ne peut être déterminée et
dans le cas où la valeur mesurée pour la fréquence (f) est inférieure à la valeur de référence (f_{ref}), on conclut à la présence d'une corrosion et/ou d'une abrasion sur les tiges vibrantes (8a, 8b) et/ou à la présence d'un dépôt dur dans la zone de la membrane (7),
et **en ce que**, dans le cas où l'écart entre la valeur mesurée (A) et la valeur de référence (A_{ref}) pour l'amplitude est inférieur à une valeur limite pouvant être prédéfinie, et
dans le cas où la valeur mesurée pour la fréquence (f) est inférieure à la valeur de référence (f_{ref}), on conclut à la présence d'un dépôt dur dans la zone des tiges vibrantes (8a, 8b) et/ou à une corrosion et/ou une abrasion dans la zone de la membrane (7),
et **en ce que**, dans le cas où la valeur mesurée pour l'amplitude (A) est inférieure à la valeur de référence (A_{ref}), et
dans le cas où l'écart entre la valeur mesurée (f) et la valeur de référence (f_{ref}) pour la fréquence est inférieur à une valeur limite pouvant être prédéfinie, on conclut à un défaut dans la zone de l'unité d'entraînement/de réception (5), notamment dans la zone d'au moins un élément piézoélectrique de l'unité d'entraînement/de réception (5), et/ou à un défaut dans la zone de l'électronique (6).

2. Procédé selon la revendication 1,
pour lequel on détermine un écart entre les valeurs mesurées (f, A) et des valeurs de référence (f_{ref}, A_{ref}) pour la fréquence et/ou l'amplitude, et
pour lequel l'indicateur d'état est déterminé à l'aide de l'écart.

3. Procédé selon la revendication 2,
pour lequel on détermine si l'écart pour la fréquence (f) et/ou pour l'amplitude (A) dépasse une valeur limite pouvant être prédéfinie.

4. Procédé selon au moins l'une des revendications précédentes,
pour lequel, concernant les valeurs de référence pour l'amplitude (A_{ref}) et la fréquence (f_{ref}), il s'agit respectivement d'une valeur pour l'amplitude et la fréquence, laquelle valeur correspond à une vibration de résonance de l'unité apte à vibrer (4) dans le mode de vibration fondamental et dans l'air.

5. Procédé selon au moins l'une des revendications précédentes,
pour lequel l'unité apte à vibrer mécaniquement (4) est excitée dans l'air pour produire des vibrations mécaniques de résonance dans le mode de vibration fondamental, et
pour lequel le signal de réception représente les vibrations de résonance de l'unité apte à vibrer (4) dans le mode de vibration fondamental.

6. Procédé selon au moins l'une des revendications précédentes,
pour lequel l'indicateur d'état est une indication d'un dépôt, d'une corrosion, d'une abrasion dans la zone de l'unité apte à vibrer (4), d'un défaut dans la zone d'une unité d'entraînement/de réception (5), unité au moyen de laquelle l'excitation de l'unité apte à vibrer (4) en vibrations mécaniques est effectuée, ou une indication d'un défaut d'une électronique (6) d'un capteur (1 ), qui comprend l'unité apte à vibrer (4).

7. Procédé selon au moins l'une des revendications précédentes,
pour lequel l'unité apte à vibrer (4) est une fourchette vibrante comprenant une membrane (7) et deux tiges vibrantes (8a, 8b) fixées à la membrane (7).

8. Procédé selon au moins l'une des revendications 1 à 6,
pour lequel, dans le cas où la valeur mesurée pour l'amplitude (A) et la valeur mesurée pour la fréquence (f) sont respectivement inférieures à la valeur de référence (f_{ref}, A_{ref}) respective, on conclut à la présence d'un dépôt mou dans la zone des tiges vibrantes (8a, 8b) et/ou à des résidus de produit dans la zone de l'unité apte à vibrer (4).

9. Procédé selon au moins l'une des revendications précédentes,
lequel procédé est conçu selon le standard IO-Link.
